(19) Europäisches Patentamt
European Patent Office
Office européen des brevets

(11) **EP 3 339 208 A1**

(12) **EUROPEAN PATENT APPLICATION**
published in accordance with Art. 153(4) EPC

(43) Date of publication:
**27.06.2018 Bulletin 2018/26**

(51) Int Cl.:
***B65D 23/02*** (2006.01)   ***B05D 1/02*** (2006.01)
***B05D 1/36*** (2006.01)   ***B65D 85/72*** (2006.01)

(21) Application number: **16838905.4**

(22) Date of filing: **27.06.2016**

(86) International application number:
**PCT/JP2016/068999**

(87) International publication number:
**WO 2017/033558 (02.03.2017 Gazette 2017/09)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **21.08.2015 JP 2015163562**

(71) Applicants:
• **Toyo Seikan Co., Ltd.**
  **Tokyo 141-8640 (JP)**
• **Toyo Seikan Group Holdings, Ltd.**
  **Shinagawa-ku**
  **Tokyo 141-8627 (JP)**

(72) Inventors:
• **NYUU, Keisuke**
  **Yokohama-shi**
  **Kanagawa 230-0001 (JP)**

• **OKADA, Yoshiaki**
  **Yokohama-shi**
  **Kanagawa 230-0001 (JP)**
• **MIYAZAKI, Tomoyuki**
  **Yokohama-shi**
  **Kanagawa 230-0001 (JP)**
• **ASAKURA, Mikio**
  **Yokohama-shi**
  **Kanagawa 230-0001 (JP)**
• **AKUTSU, Yosuke**
  **Yokohama-shi**
  **Kanagawa 240-0062 (JP)**
• **IWAMOTO, Shinya**
  **Yokohama-shi**
  **Kanagawa 240-0062 (JP)**

(74) Representative: **J A Kemp**
  **14 South Square**
  **Gray's Inn**
  **London WC1R 5JJ (GB)**

(54) **STRUCTURE HAVING LIQUID FILM AND METHOD FOR PRODUCING SAME**

(57)   A structured body 10 of the present invention includes a base material 1 formed into a predetermined shape and a liquid film 3 provided on a surface thereof, and droplets 5 of a liquid incompatible with a liquid for the liquid film 3 are distributed on the liquid film 3.

**Fig. 1**

**Description**

Technical Field:

The present invention relates to a structured body including a base material formed into a predetermined shape and a liquid film formed on a surface of the base material, and further, a method for producing the structured body.

Background Art:

A container to contain a liquid content is required to have an ability of discharge with respect to the content irrespective of materials of the container. In a case of containing a liquid having a lower viscosity such as water, there is substantially no necessity to take the discharge ability into consideration. However, in a case of containing a viscous and thick substance having high viscosity, like mayonnaise and ketchup, the discharge ability may have a considerable influence on both a plastic container and a glass container. More specifically, the content would not be discharged quickly even by tilting the container, and the content would adhere to the container wall, and thus, it cannot be used up. As a result, a considerable amount of the content would not be discharged but remain particularly on the bottom of the container.
Recently, various techniques have been proposed to increase slipperiness to a viscous and thick substance by forming an oil film on a surface of a shaped article such as a container (for example, Patent documents 1 and 2).
These techniques have been focused recently since it is possible to improve drastically slipperiness in comparison with a case of adding additives such as a lubricant to a synthetic resin that forms a surface of the shaped article.
Furthermore, the applicants have proposed a packaging container for accommodating an oil-in-water emulsified substance as a content represented by a mayonnaise-type food. The container has an oil film formed on the container inner surface to be in contact with the oil-in-water emulsified substance (Japanese Patent Application 2014-023425).
However, in the aforementioned techniques to form an oil film on the base material surface to modify the surface characteristics, the slipperiness exhibited by the oil film has a short effective life. After a long period of time, the slipperiness may deteriorate and sometimes result in problems, for instance, the contents or the like may adhere to the surface . This tendency is particularly noticeable when the substance to slip on the surface is an emulsified substance, in particular a mayonnaise-type food including a small amount of oil.
Further, Patent document 3 proposes a mold release oil made from a water-in-oil emulsion comprising a liquid fat/oil component, animal/plant-derived wax, and water. This document indicates that this mold release oil is sprayed on a container to prevent adhesion of dough to the container at the time of baking bread or cakes.
Experiments conducted by the inventors have clarified that a liquid film of this kind of mold release oil can improve the slipperiness to some degree but it does not contribute so much to sustain the slipperiness for a long time.

Prior Art Documents:

Patent Documents:

      Patent document 1: WO2012/100099
      Patent document 2: WO2013/022467
      Patent document 3: JP-A-2008-22791

Summary of the Invention:

Problems to be solved by the invention:

An object of the present invention is to provide a structured body including a base material formed into a predetermined shape and a liquid film provided on a surface of the base material so as to stably exhibit slipperiness to a viscous and thick substance in a sustainable manner, in particular to an emulsified substance, and a method for producing the structured body.
Another object of the present invention is to provide a structured body that is used as a container to contain a viscous and thick substance as the content, in particular an emulsified substance, and a method for producing the structured body having excellent slipperiness to the emulsified substance.

Means for solving the problems:

As a result of a large number of experiments and reviewing on slipperiness to an emulsified substance, the inventors have reached the present invention. Specifically, the inventors have found that slipperiness to an emulsified substance is exhibited stably for a long period of time when a liquid film (e.g., oil film) to enhance slipperiness to the emulsified substance is formed on a surface of a base material and further droplets of a liquid (e.g., water) incompatible with the liquid (e.g., oil) for the liquid film are distributed on the liquid film. The shape of the base material is not particularly limited.

The present invention provides a structured body comprising: a base material formed into a predetermined shape and a liquid film provided on a surface of the base material, wherein droplets of a liquid incompatible with a liquid for the liquid film are distributed on the liquid film.

It is preferable in the structured body of the present invention that

(1) the droplets are formed by spraying the incompatible liquid on the surface of the liquid film;
(2) the droplets are formed by spraying the liquid for the liquid film on the surface of the base material and simultaneously spraying the incompatible liquid on the surface of the base material;
(3) the liquid for the liquid film is either edible oil or water, and the droplets are formed of either water or an edible oil;
(4) the liquid for the liquid film is the edible oil, and the droplets are formed of water;
(5) the base material is a container;
(6) the container is capable of containing an emulsified substance as a content; and
(7) the emulsified substance is a mayonnaise-type food.

The present invention further provides a method for producing the structured body, comprising steps of:

preparing a base material formed into a predetermined shape;
providing a liquid film on a surface of the base material; and
spraying a liquid incompatible with a liquid for the liquid film.

In the method of the present invention, any of the following processes can be employed suitably:

(1) the step of providing the liquid film is conducted by spraying the liquid for the liquid film;
(2) the step of providing the liquid film is followed by the step of spraying the incompatible liquid; and
(3) the step of providing the liquid film and the step of spraying the incompatible liquid are conducted simultaneously.

Effects of the invention:

The structured body of the present invention exhibits excellent slipperiness to a viscous and thick emulsified substance such as a mayonnaise-type food, and furthermore the slipperiness is exhibited stably for a long period of time.

For instance, Example 1 below refers to a structured body of the present invention. The structured body has a liquid film of edible oil formed on a surface of a base material (inner surface of a directly blow-formed container), on which droplets of water incompatible with the edible oil are sprayed. After this container is filled with a mayonnaise-type food and stored for one week at room temperature, substantially all of the content (the mayonnaise-type food) can be discharged rapidly (i.e. , its initial slipperiness is high) . In addition to that, even when the container is filled with the content and then stored for about two months, substantially all of the content can be discharged similarly to the case of the initial slipperiness, (i.e., its overtime slipperiness is high).

Comparative Example 1 refers to a case of forming the liquid film with only the edible oil but not using water. The initial slipperiness in Comparative Example 1 is comparable to that of the present invention, but the overtime slipperiness after a certain time period as mentioned above deteriorates considerably, and a quite amount of content may remain in the container.

In this manner, the present invention provides sustainability of slipperiness to the emulsified substance by distributing droplets of a liquid on the liquid film, where the liquid of the droplets is incompatible with the liquid for the liquid film. The inventors assume the mechanism as follows.

In a case where the liquid film is formed only of oil such as an edible oil, the oil in the liquid film is dispersed gradually into an emulsified substance flowing on the liquid film, whereby the liquid film may disappear. This may make the slipperiness insufficient and further degrade the slipperiness over time. This holds true for a case where the liquid film is formed of an emulsion (dispersion liquid using an emulsifier represented by a surfactant). Namely, it is considered that in a liquid film formed of an emulsion, water in the liquid film is stabilized by the surfactant (emulsifier), and thus, it remains stably in the interior of the liquid film, while the surface of the liquid film is formed of the oil. In this case, the emulsified substance is brought into contact with the oil included in the substances forming the liquid film, and thus, the oil in the emulsion for the liquid film may be decreased since it is captured into the emulsified substance passing on the surface of the liquid film and disappears. As a result, the slipperiness may deteriorate over time.

According to the present invention, droplets of a liquid (for example, water droplets) incompatible with the liquid for the liquid film are distributed on the liquid film. In this case, the droplets may be present between the liquid film and the emulsified substance flowing on the liquid film. It is considered that the droplets prevent or control the liquid for the liquid film from being absorbed into the emulsified substance, thereby avoiding effectively the overtime deterioration of the slipperiness of the liquid film to the emulsified substance.

Further, since the droplets are incompatible with the liquid for the liquid film, they are not absorbed by the liquid film and exhibit great slipperiness to the liquid film. As a result, when the emulsified substance flow on the liquid film with the droplets sandwiched between the liquid film and the emulsified substance, the droplets function as a lubricant to enhance the slipperiness of the liquid film to the emulsified substance, thereby exhibiting an excellent slipperiness to the emulsified substance.

Another advantage of the structured body, in particular the container of the present invention, is that the edible oil and the water (droplets) can be treated with heat for sterilization or the like in the stage immediately before formation of the liquid film or distribution of the droplets at the time of forming the liquid film with the edible oil and distributing the droplets on the liquid film.

For instance, the inventors have proposed a structured body having a base material on which a liquid film of a suspension dispersion of an edible oil and water is formed (Japanese Patent Application 2015-86083). Similarly to the present invention, the structured body exhibits slipperiness to an emulsified substance and excellent overtime stability of the slipperiness, since the liquid film of the suspension dispersion may have a surface structure imparted by phase separation of water, and it resembles to that of a liquid film with distributed droplets. However, in the structured body disclosed by the document of the conventional technique or any other structured body having a liquid film formed of an emulsified substance, it is impossible to conduct a heat treatment such as heat sterilization of the suspension dispersion (or an emulsified liquid) immediately before formation of the liquid film, since the suspension dispersion for the liquid film may soon experience a phase separation due to the applied heat. For this reason, in a case of preparing a food container of a structured body having a liquid film formed on the surface of the base material by the suspension dispersion, it is necessary to conduct a heat treatment such as heat sterilization before forming the suspension dispersion (or emulsified liquid) in order to maintain a sterilized state from the time of preparing a suspension dispersion by mixing to the time of forming a liquid film. This may cause a considerable difficulty in management of the suspension dispersion.

In contrast, according to the present invention, it is possible to conduct a heat treatment such as heat sterilization of the liquid for the liquid film and the liquid for the droplets immediately before formation of the liquid film and distribution of the droplets. Thereafter immediately, the liquid film and the droplets were formed, it is also possible to conduct a heat treatment of the liquid film and the droplets, thereby achieving the aforementioned slipperiness and the overtime stability in the slipperiness. Since the structured body of the present invention can be sterilized with heat immediately before liquid film formation, the structured body can be managed easily from a hygienic standpoint, and thus, it is particularly useful as a container to contain emulsified substances such as a mayonnaise-type food.

Brief Description of the Drawings:

[Fig. 1]: a schematic side cross-sectional view showing a surface of a structured body of the present invention.
[Fig. 2]: a view showing a directly blow-formed bottle as a preferable example of a structured body of the present invention.

Mode for Carrying Out the Invention:

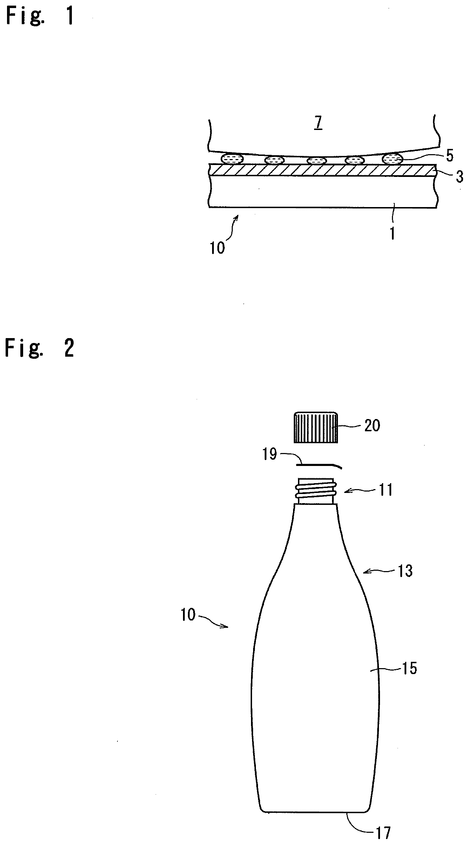

A structured body of the present invention denoted as 10 in Fig. 1 has a base material 1 formed into a predetermined shape and a liquid film 3 formed on a surface thereof, and droplets 5 distributed on this liquid film 3. The droplets 5 are formed of a liquid (such as water) incompatible with the liquid (such as edible oil) for the liquid film 3. A viscous and thick substance (emulsified substance) 7 is present in contact with the surface of this structured body 10.

In the structured body 10 of the present invention, the droplets 5 may be distributed between the viscous and thick substance 7 and the liquid film 3, and the droplets 5 may prevent or control effectively the liquid for the liquid film 3 from being absorbed by the viscous and thick substance 7. Moreover, the droplets 5 are incompatible with the liquid film 3, and thus, they exhibit high slipperiness to the liquid film 3. As a result, when the viscous and thick substance 7 flows on this liquid film 3, both the liquid film 3 and the droplets 5 exhibit slipperiness so as to impart extremely high slipperiness to the viscous and thick substance 7. This can effectively prevent or control overtime deterioration in slipperiness, which is caused by wear of the liquid film 3 (phenomenon that the liquid for the liquid film 3 is absorbed by the substance 7).

The substances for the base material 1 are not limited in particular as long as the base material 1 can hold the liquid film 3 on its surface, and the base material 1 may be formed of any suitable substances such as resins, glass and metals in accordance with the application.

From the viewpoint of exhibiting excellent sustainable slipperiness to viscous and thick substances, particularly to an emulsified substance, the base material 1 preferably is shaped as a pipe to flow the emulsified substance or a container to contain the emulsified substance or a closure for the container. It is preferable that the liquid film 3 is formed on the surface to be in contact with the emulsified substance, and further the droplets 5 are present between the liquid film 3 and the emulsified substance.

Further, from the viewpoint of holding the liquid film 3, it is the most preferable that the surface of the base material 1 (the underlying surface of the liquid film 3) is made of a synthetic resin.

The synthetic resin (hereinafter, which may be called underlying resin) may be any formable thermoplastic resin or thermosetting resin. Usually, a thermoplastic resin is preferred from the viewpoint of easy formation and capability of holding stably the oil (edible oil) in the liquid film.

Examples of the thermoplastic resin are as follows.

Olefin resins such as low-density polyethylene, high-density polyethylene, polypropylene, polyl-butene, poly4-methyl-1-pentene, random or block copolymers of $\alpha$-olefins (such as ethylene, propylene, 1-butene, and 4-methyl-1-pentene) and a cyclic olefin copolymer;

Ethylene-vinyl copolymers such as ethylene-vinyl acetate copolymer, ethylene-vinyl alcohol copolymer, and ethylene-vinyl chloride copolymer;

Styrene type resins such as polystyrene, acrylonitrile-styrene copolymer, ABS, and $\alpha$-methylstyrene-styrene copolymer;

Vinyl type resins such as polyvinyl chloride, polyvinylidene chloride, vinyl chloride-vinylidene chloride copolymer, methyl polyacrylate, and polymethylmethacrylate;

Polyamide resins such as Nylon 6, Nylon 6-6, Nylon 6-10, Nylon 11, and Nylon 12;

Polyester resins such as polyethylene terephthalate (PET), polybutylene terephthalate, polyethylene naphthalate, and copolymerized polyesters thereof;

Polycarbonate resins;

Polyphenylene oxide resins; and

Biodegradable resins such as polylactic acid.

Needless to note, any of these thermoplastic resins can be blended to be used as an underlying layer as long as the formability is not impaired.

Among the aforementioned thermoplastic resins, the olefin resins and polyester resins are used preferably in the present invention. These resins are used as materials for a container to contain a viscous and thick content.

Among them, the olefin resins are used most preferably, since the olefin resin has a glass transition point (Tg) lower than that of a polyester resin such as PET, and thus, its molecules have high mobility in room temperature. As a result, a part of the edible oil in the components of the oil film may penetrate into the interior of the resin to hold the oil film stably on the surface of the container.

Further, the olefin resins are highly flexible and they are subjected to direct blow-formation described above to provide a squeeze container (squeeze bottle). The olefin resin is suitable also from the viewpoint of applying the present invention to such containers.

The base material 1 may have a single layer structure of the aforementioned thermoplastic resin, or it may be also a laminated body of a thermoplastic resin and paper. Alternatively, it may have a multi-layered structure as a combination of a plurality of thermoplastic resins.

In particular, in a case where the base material 1 is shaped as a container, when the inner surface is formed of an olefin resin or a polyester resin, an oxygen-barrier layer or an oxygen-absorbing layer may be laminated as an intermediate layer via any suitable layer of adhesive resin, while a resin of the same type as that of the underlying resin (olefin resin or a polyester resin) forming the inner surface may be laminated on the outer surface side.

The oxygen-barrier layer in the multi-layered structure is formed of an oxygen-barrier resin such as ethylene-vinyl alcohol copolymer and polyamide, for instance. Any other thermoplastic resin may be blended with the oxygen-barrier resin as long as the oxygen-barrier property is not impaired.

Further as described in JP-A-2002-240813 for instance, the oxygen-absorbing layer is a layer including a polymer which is easily oxidized (oxidizable polymer) and a transition metal-based catalyst. The oxidizable polymer is oxidized by oxygen due to the action of the transition metal-based catalyst, thereby absorbing the oxygen to block permeation of the oxygen. Since the oxidizable polymer and a transition metal-based catalyst are described in detail in the JP-A-2002-240813, the detailed description is omitted here. Representative examples of the oxidizable polymer include an olefin resin having a tertiary carbon atom (such as polypropylene, polybutene-1, or a copolymer thereof), thermoplastic polyester or aliphatic polyamide; a xylylene group-containing polyamide resin; and ethylene type unsaturated group-containing polymer (such as a polymer derived from a polyene such as butadiene). Representative examples of the transition metal-based catalyst include inorganic salts, organic acid salts or complex salts of transitional metals such as iron, cobalt and nickel.

The adhesive resins used for to adhere the respective layers are known per se, and the examples include carboxylic acids such as maleic acid, itaconic acid, fumaric acid or an anhydride thereof; olefin resins graft-modified with amide, ester or the like; an ethylene-acrylic acid copolymer; an ion-crosslinked olefin copolymer; and an ethylene-vinyl acetate copolymer.

Thickness of each layer mentioned above can be set suitably in accordance with the properties required for the layer.

It is also possible to provide as an inner layer a regrind layer prepared by blending a scrap like a burr generated during formation of the structured body having the aforementioned multi-layered structure, with a virgin resin such as an olefin resin. Needless to note, in the container formed with a container inner surface of either an olefin resin or a polyester resin, it is also possible to form the outer surface with either a polyester resin or an olefin resin.

In the present invention, the liquid film 3 to be provided on the surface of the base material 1 may be formed of a liquid that exhibits slipperiness to the viscous and thick substance 7 (emulsified substance).

Examples of the liquid include hydrocarbon liquids such as liquid paraffin, a fluorine-based liquid, lipophilic liquids such as silicone oil and edible oil, and hydrophilic liquids such as water and ionized water. Any of these liquids can enhance slipperiness to the viscous and thick substance 7 like an emulsified substance.

Among these liquids, a lipophilic liquid, and in particular, edible oil is most preferred because it has a particularly high viscosity and thus can be held easily on the surface of the base material 1.

The edible oil is a nonvolatile liquid with a low vapor pressure under atmospheric pressure, and it has a moderately high viscosity. Therefore, it may hardly drop off from the surface of the shaped article 1. Furthermore, the edible oil has an especially low contact angle with respect to the olefin resin, which can provide another advantage. That is, the edible oil may spread easily on the surface formed of the olefin resin, and it may not cause any particular problem even if it gets into contact and mixed with food like a mayonnaise-type food.

Examples of the edible oil include soybean oil, rapeseed oil, olive oil, rice oil, corn oil, safflower oil, sesame oil, palm oil, castor oil, avocado oil, coconut oil, almond oil, walnut oil, hazel oil, and salad oil, which can be used also as a mixture thereof.

It is preferable to select and use oil having a smaller contact angle with respect to the surface of the base material 1 underlying the liquid film 3 at room temperature (25°C). The contact angle is not more than 38° for instance, and particularly preferably not more than 25°.

Some types of edible oils may be compatible (easily mixed) with the substance to flow on the liquid film 3. Such edible oil may be replaced by any other edible oil incompatible with the substance to flow on the liquid film 3. All of the edible oils listed above are incompatible with the mayonnaise-type food.

Usually, the liquid film 3 described above may be formed on the surface of the base material 1 such that it has a thickness corresponding to a liquid amount in a range of about 0.74 to about 2.59 mg/cm$^2$. When the liquid amount is too large, dripping or the like tends to occur. In such a case, when the droplets 5 mentioned below are formed on the liquid film 3, the droplets 5 may drop off together with the liquid for the liquid film 3. When the amount of liquid for the liquid film 3 is reduced, the liquid film 3 cannot exhibit sufficient slipperiness, resulting in unsatisfactory slipperiness to the viscous and thick substance 7.

The liquid film 3 can be formed on the surface of the base material 1 having a predetermined shape, by means of coating like dipping and spraying in accordance with the embodiment of the base material 1. In formation of a base material 1 having a surface made of a synthetic resin, a synthetic resin for forming the surface of the base material 1 and a liquid for forming the liquid film 3 are mixed and extruded so that the liquid may be bled on the surface of the base material, though not all of the types of liquid may be applicable to this process. The base material may have a roughened surface. It is possible to form an irregular surface by coating with fine particles (particles of metal oxide or polymer), a porous material, a crystalline additive or the like. This coating process may be combined with any other surface treatment (s) such as blasting, plasma treatment, corona treatment and transcription.

In the present invention, the droplets 5 to be distributed on the liquid film 3 are formed of a liquid that is incompatible with the liquid for the liquid film 3. Namely, if the aforementioned liquid film 3 is formed of a lipophilic liquid such as edible oil, the droplets 5 are formed of a hydrophilic liquid represented by water. If the liquid film 3 is formed of a hydrophilic liquid, the droplets 5 are formed of a lipophilic liquid. As described above, it is most preferable in the present invention that the liquid film 3 is formed of edible oil and the droplets 5 are formed of water.

The droplets 5 distributed on the liquid film 3 serve to prevent or control effectively the liquid for the liquid film 3 from being absorbed in the viscous and thick substance 7 in a state of an emulsified substance, thereby effectively preventing deterioration overtime in the slipperiness of the liquid film 3. As a result, the liquid film 3 can exhibit stably its slipperiness for a long period of time.

The droplets 5 distributed on the liquid film 3 exhibit high slipperiness to the liquid film 3 since they are formed from a liquid incompatible with the liquid for the liquid film 3. Therefore, when the viscous and thick substance 7 flows thereon, the droplets 5 flow together with the substance 7 on the liquid film 3, whereby a remarkably high slipperiness to the viscous and thick substance 7 is exhibited.

In the present invention, the droplets 5 are preferably small droplets having a diameter of for instance not more than 62 μm, and particularly in a range of 30 to 50 μm from the viewpoint of stable distribution on the liquid film 3. When the diameter of the droplets 5 is too large, the droplets 5 may coalesce to cause a disadvantage that the droplets 5 run down on the liquid film 3.

From the viewpoint of distributing the droplets 5 of a small diameter, the total liquid amount of the droplets 5 present with the liquid film 3 is preferably in a range of about 0.44 to about 1.35 mg/cm$^2$. The droplets 5 can be formed by, for instance, spraying the amount of liquid on the liquid film 3.

As described above, the structured body 10 of the present invention having the aforementioned surface structure can be produced by forming the liquid film 3 on the base material 1 having a desired shape, spraying thereon with a liquid incompatible with the liquid for the liquid film 3, thereby distributing the droplets 5 on the liquid film 3.

In formation of the base material 1, it is possible to mix a resin material for forming the surface material with a liquid for forming the liquid film 3 so that the liquid film 3 can be formed at the same time of shaping the base material 1.

Alternatively, it is possible to form the structured body 10 by spraying the liquid film 3 and a liquid incompatible with the liquid for forming the liquid film 3 simultaneously on the base material 1, thereby forming the liquid film 3 and the droplets 5.

The liquids to constitute the liquid film 3 and the droplets 5 can be heated to an appropriate temperature for sterilization immediately before formation of the liquid film 3 and the droplets 5.

The thus produced structured body 10 of the present invention is excellent in slipperiness to the emulsified substance and sustainability of the slipperiness, and thus, it can be applied effectively to a case where the emulsified substance flows in contact with the liquid film 3. Therefore, the most preferable application of the structured body 10 is a container to contain the emulsified substance, namely, the base material 1 is embodied as a container to enjoy the maximal advantage of the present invention.

The shape of the container is not limited in particular and can be determined in accordance with the material of the container. The examples thereof include a cup, a bottle, a pouch, a syringe, a pot, and a tray. The container can also be stretch-shaped.

For preparing a container of a synthetic resin, a preformed body having the aforementioned surface (inner surface to get in contact with a content) may be shaped by a method known per se, which is subjected to post-processes such as bonding of a film by heat-sealing, vacuum-shaping such as a plug-assist shaping, and a blow-shaping to produce the base material 1 shaped as a container. On the surface of this base material 1, the liquid film 3 is formed by the aforementioned method, on which the droplets 5 are distributed, and lastly the container is filled with a content of an emulsified substance (viscous and thick substance 7) to be supplied to a user.

Due to the filling pressure by the aforementioned emulsified substance, the droplets 5 formed on the liquid film 3 may be held stably without falling off from the liquid film 3.

Fig. 2 shows a directly blow-formed bottle as the most preferred embodiment of the structured body 10 of the present invention.

The structured body denoted as 10 as a whole in Fig. 2 is used as a bottle. It has a screwed neck portion 11, a body portion wall 15 linked to the neck portion 11 through a shoulder portion 13, and a bottom wall 17 that closes the lower end of the body portion wall 15. A liquid film 3 as mentioned above is to be formed on the inner surface of the bottle, and further droplets 5 are to be formed by spraying. The bottle 10 is filled with the content, then sealed with an aluminum foil 19 or the like at the mouth portion (upper end of the neck portion 11), and further equipped with a cap 20 for sale.

The structured body 10 of the present invention has excellent slipperiness to an emulsified substance. Examples of the emulsified substance include an oil-in-water (O/W) emulsified substance where oil droplets are dispersed in water, and an water-in-oil (W/O) emulsified substance where water droplets are dispersed in oil. The structured body 10 can be applied to various emulsified substances such as high-fat food called mayonnaise or low-fat mayonnaise-type food.

Experiments by the inventors show that an emulsified substance having less oil content has difficulty in providing an effect of improving the slipperiness, and the slipperiness tends to deteriorate more over time. Since the present invention exhibits excellent slipperiness and sustainability of the slipperiness even to the emulsified substance, it is most preferred to apply the present invention to a low-fat emulsified substance.

The present invention may be applied most preferably to a container to contain a highly viscous paste-like emulsified substance particularly having a viscosity of not less than 500 mP·as at 23°C, such as a mayonnaise-type food having a lipid content of not more than 50%, a salad creamy dressing, and any other semisolid dressing.

Examples:

The invention will be described by way of the following experimental examples.

The container, the liquids and the content used in each of Examples and Comparative Examples are as mentioned below.

<Container>

A multi-layered directly blow-formed bottle having a multi-layered structure of the following layer constitution and an internal capacity of 400 g was prepared.

Inner layer: low-density polyethylene resin (LDPE)
Intermediate layer: ethylene-vinyl alcohol copolymer (EVOH)
Outer layer: low-density polyethylene resin (LDPE)
Adhesive layer (between inner/outer layer and intermediate layer): acid-modified polyolefin

<Liquids (liquid film and droplets)>

Edible oil: medium-chain fatty acid loaded salad oil (viscosity: 33 mPa•s at 25°C, contact angle: 18 degrees)
Water: pure water

Specific amounts of edible oil and water indicated in Table 1 were sprayed uniformly on the inner surface of the container by use of an air spray. Specifically, the edible oil was sprayed before spraying the water; or the edible oil and the water were sprayed simultaneously.

<Contents>

One egg (50 g), 15 cc of vinegar and 2.5 cc of salt were mixed, with which 150 cc of edible oil was further mixed to prepare a mayonnaise-type food for experiment. Required amounts of contents were prepared to be used for respective Examples and Comparative Examples.

Slipperiness was evaluated in the following manner by using the contents in each of Examples and Comparative Examples .

<Slipperiness evaluation>

A spray nozzle was inserted inside a bottle to reach the bottom, and pulled up while spraying a liquid to coat the area from the bottle bottom to the whole side wall. The bottle provided with the liquid dispersed on the inner surface was filled with 400 g of contents of a mayonnaise-type food by a usual method, heat-sealed with an aluminum foil at the mouth portion and sealed tightly with a cap so as to obtain a filled bottle.

The bottle filled with the content was stored at 23 °C for one week (initial bottle).

The bottle was stored further for each period and at each temperature as illustrated in Table 1, then pressed at the body portion to squeeze out completely the content through the bottle mouth portion. Later, air was introduced into the bottle to restore the bottle shape.

Then, this bottle was placed upside down (i.e. , the mouth portion facing downward) and stored for one hour. After that, the degree of slipperiness of the content on the bottle body portion wall (the degree the body portion wall being clear of the content) was measured to calculate the content adhesion rate by the following formula.

```
Content adhesion rate (%) = (Surface area with content adhered / surface area of bottle body portion wall) X 100
```

Based on the content adhesion rate calculated from the above formula, the slipperiness was evaluated with reference to the following criteria.

○: Content adhesion rate is less than 10%
△: Content adhesion rate is 10% or more and less than 50%
×: Content adhesion rate is 50% or more

[Examples 1-6]

The thus shaped bottles were coated with the edible oil and water at the ratios and amounts illustrated in Table 1, and the slipperiness was evaluated. The coated bottle each held a whitish liquid film as a mixture of the edible oil and water.

[Comparative Example 1]

The thus shaped bottle was coated with only the edible oil of the amount illustrated in Table 1 and the slipperiness was evaluated. The coated bottle held a transparent liquid film of the edible oil.

[Comparative Example 2]

The thus shaped bottle was coated with water and then coated with the edible oil. The water used for coating accumulated at the bottom of the bottle, and the bottle held the transparent liquid film of the edible oil sprayed later. Slipperiness evaluation was conducted on this bottle containing the accumulated water.

Table 1

| | Spray process (order of spray) | Liquid film immediately after coating | Coating amount | | Slipperiness evaluation | | |
|---|---|---|---|---|---|---|---|
| | | | Edible oil coating amount (mg/cm$^2$) | Water coating amount (mg/cm$^2$) | Initial bottle | Bottle stored at 23°C for 2 weeks | Bottle stored at 23°C for 2 months |
| Example 1 | Edible oil-water | Whitish | 0.98 | 0.98 | ○ | ○ | ○ |
| Example 2 | Simultaneously | Whitish | 0.98 | 0.98 | ○ | ○ | ○ |
| Example 3 | Edible oil-water | Whitish | 0.74 | 0.74 | ○ | ○ | ○ |
| Example 4 | Edible oil-water | Whitish | 1.35 | 1.35 | ○ | ○ | ○ |
| Example 5 | Edible oil-water | Whitish | 1.38 | 0.59 | ○ | ○ | ○ |
| Example 6 | Simultaneously | Whitish | 1.38 | 0.59 | ○ | ○ | ○ |
| Example 7 | Edible oil-water | Whitish | 1.03 | 0.44 | ○ | ○ | ○ |
| Example 8 | Edible oil-water | Whitish | 2.59 | 1.11 | ○ | ○ | ○ |
| Com. Ex. 1 | - | Transparent | 1.97 | - | ○ | × | × |
| Com. Ex. 2 | Water-edible oil | Transparent | 0.98 | 0.98 | ○ | × | × |

By forming a liquid film of edible oil with water distributed therein, the slipperiness of the content was improved and sustained even after storage for a long period of time at high temperature. This result shows that an article having a liquid film formed by coating its inner surface with a liquid film (edible oil) with droplets (water) dispersed therein has excellent slipperiness to the contents, and the performance can be sustained for a long period of time.

In the case where water was sprayed before spraying the edible oil, the water was not held in the bottle, and the liquid film formed in this case was substantially the same as that of the bottle coated only with the edible oil.

Explanations of Letters or Numerals:

1: base material
3: liquid film
5: droplets
7: viscous and thick substance (emulsified substance)
10: structured body
11: neck portion
13: shoulder portion
15: body portion wall
17: bottom wall

## Claims

1. A structured body comprising a base material formed into a predetermined shape and a liquid film provided on a surface of the base material, wherein droplets of a liquid incompatible with a liquid for the liquid film are distributed on the liquid film.

2. The structured body according to claim 1, wherein the droplets are formed by spraying the incompatible liquid on the surface of the liquid film.

3. The structured body according to claim 1, wherein the droplets are formed by spraying the liquid for the liquid film on the surface of the base material and simultaneously spraying the incompatible liquid on the surface of the base material.

4. The structured body according to claim 1, wherein the liquid for the liquid film is either edible oil or water, and the droplets are formed of water or an edible oil.

5. The structured body according to claim 4, wherein the liquid for the liquid film is the edible oil, and the droplets are formed of water.

6. The structured body according to claim 1, wherein the base material is a container.

7. The structured body according to claim 5, wherein the container is capable of containing an emulsified substance as a content.

8. The structured body according to claim 7, wherein the emulsified substance is a mayonnaise-type food.

9. A method for producing the structured body according to claim 1, comprising steps of:

    preparing a base material formed into a predetermined shape;
    providing a liquid film on a surface of the base material; and
    spraying a liquid incompatible with a liquid for the liquid film.

10. The method according to claim 9, wherein the step of providing the liquid film is conducted by spraying the liquid for the liquid film.

11. The method according to claim 9, wherein the step of providing the liquid film is followed by the step of spraying the incompatible liquid.

12. The method according to claim 9, wherein the step of providing the liquid film and the step of spraying the incompatible liquid are conducted simultaneously.

Fig. 1

Fig. 2

**INTERNATIONAL SEARCH REPORT**

| International application No. |
| --- |
| PCT/JP2016/068999 |

A. CLASSIFICATION OF SUBJECT MATTER
*B65D23/02*(2006.01)i, *B05D1/02*(2006.01)i, *B05D1/36*(2006.01)i, *B65D85/72* (2006.01)i

According to International Patent Classification (IPC) or to both national classification and IPC

B. FIELDS SEARCHED

Minimum documentation searched (classification system followed by classification symbols)
B65D23/02, B05D1/02, B05D1/36, B65D85/72

Documentation searched other than minimum documentation to the extent that such documents are included in the fields searched

| | | | |
| --- | --- | --- | --- |
| Jitsuyo Shinan Koho | 1922–1996 | Jitsuyo Shinan Toroku Koho | 1996–2016 |
| Kokai Jitsuyo Shinan Koho | 1971–2016 | Toroku Jitsuyo Shinan Koho | 1994–2016 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | WO 2014/188883 A1 (Toyo Seikan Group Holdings, Ltd.), 27 November 2014 (27.11.2014), paragraphs [0013] to [0079]; fig. 1 to 2 & US 2016/0075117 A1 paragraphs [0024] to [0177]; fig. 1 to 2 & EP 3000599 A1 & CN 105246688 A & KR 10-2016-0005096 A & JP 5673905 B1 | 1-12 |
| E,A | JP 5968491 B1 (Toyo Seikan Kaisha, Ltd., Toyo Seikan Group Holdings, Ltd.), 10 August 2016 (10.08.2016), paragraphs [0016] to [0049]; fig. 1 to 4 (Family: none) | 1-12 |

☒ Further documents are listed in the continuation of Box C.          ☐ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 26 August 2016 (26.08.16) | 06 September 2016 (06.09.16) |

| Name and mailing address of the ISA/ Japan Patent Office 3-4-3,Kasumigaseki,Chiyoda-ku, Tokyo 100-8915,Japan | Authorized officer |
| --- | --- |
| | Telephone No. |

Form PCT/ISA/210 (second sheet) (January 2015)

**INTERNATIONAL SEARCH REPORT**

International application No.

PCT/JP2016/068999

C (Continuation).  DOCUMENTS CONSIDERED TO BE RELEVANT

| Category* | Citation of document, with indication, where appropriate, of the relevant passages | Relevant to claim No. |
|---|---|---|
| P,A | WO 2016/076410 A1  (Toyo Seikan Group Holdings, Ltd.), 19 May 2016 (19.05.2016), paragraphs [0017] to [0081]; fig. 1 to 5 & JP 5962879 B1 | 1-12 |

Form PCT/ISA/210 (continuation of second sheet) (January 2015)

**EP 3 339 208 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014023425 A
- WO 2012100099 A
- WO 2013022467 A
- JP 2008022791 A
- JP 2015086083 A
- JP 2002240813 A